(19) Europäisches Patentamt
European Patent Office
Office européen des brevets

(11) Publication number : 0 179 355 B1

(12) # EUROPEAN PATENT SPECIFICATION

(45) Date of publication of patent specification : 16.01.91 Bulletin 91/03

(51) Int. Cl.$^5$ : C07F 7/18

(21) Application number : 85112806.6

(22) Date of filing : 09.10.85

(54) Novel terpene derived functional silanes.

The file contains technical information submitted after the application was filed and not included in this specification

(30) Priority : 09.10.84 US 658555

(43) Date of publication of application : 30.04.86 Bulletin 86/18

(45) Publication of the grant of the patent : 16.01.91 Bulletin 91/03

(84) Designated Contracting States : AT BE CH DE FR GB IT LI LU NL SE

(56) References cited :
GB-A- 834 326
CHEMICAL ABSTRACTS, vol. 98, no. 17, 25th April 1983, page 603, columnn 1, abstract no. 143663c, Columbus, Ohio, US; R.J. ARMSTRONG et al.: "Stereoselective cyclization of epoxy allylsilanes. A synthesis of karahana ether", & CAN. J. CHEM. 1983, 61(1), 214-215
CHEMICAL ABSTRACTS, vol. 89, no. 19, 6th November 1978, page 535, column 1, abstract no. 163117v, Columbus, Ohio, US; I. FLEMING et al.: "Carbonium ion rearrangements in the norbornyl series controlled by a silyl group", & J. CHEM. SOC., CHEM. COMMUN. 1978 (6), 245-247
CHEMICAL ABSTRACTS, vol. 81, no. 5, 5-26th August 1974, page 374, column 2, abstract no. 24905x, Columbus, Ohio, US; T. SATO et al.: "Regio- and stereoselectivities in the epoxidations of limonen, endo-dicyclopentadiene, and exo-dicyclopentadiene", & BULL. CHEM. SOC. JAP. 1974, 47(5), 1207-1208
CHEMICAL ABSTRACTS, vol. 73, no. 5, 3rd August 1970, page 389, column 1, abstract no. 25676v, Columbus, Ohio, US; L.D. NASIAK et al.: "Organosilicon chemistry. XLVIII. Addition of trichlorosilane to myrcene", & J. ORGANOMETAL. CHEM. 1970, 23(1), 91-98

(56) References cited :
CHEMICAL ABSTRACTS, vol 70, no. 1, 6-27th January 1969, page 408, column 1, abstract no. 4286r, Columbus, Ohio, US; R. TANAKA et al.: "Addition reaction of dichloromethylsilane to (+)-limonene and (+)-beta-pinene in the presence of hexachloroplatinic acid catalyst", & KOGYO KAGAKU ZASSHI 1968, 71(6), 923-928
JACS, 81, 2632-5, (1959)

(73) Proprietor : PCR, Inc.
Airport Industrial Park Waldo Road
Gainesville Florida 32609 (US)

(72) Inventor : Kremer, Paul W.
534 Northeast 8th Avenue
Gainesville Florida (US)
Inventor : Ho, Tse-Lok
3529 Sandburg Road
Jacksonville Florida (US)
Inventor : Cardenas, Carlos G.
6730 Strawberry Lane
Jacksonville Florida (US)
Inventor : DePasquale, Ralph J.
2915 Heritage Trail
Jacksonville Florida (US)

(74) Representative : Baillie, Iain Cameron et al
c/o Ladas & Parry Isartorplatz 5
D-8000 München 2 (DE)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

The invention relates to the synthesis of novel epoxy functional silanes and specifically to the hydrosilylation of limonene oxide, myrcene oxide, dihydromyrcene oxide and 2-vinyl norbornene oxide. Because the epoxy and the alkoxysilyl functionality can react independently, these compounds are useful in a number of applications as for example, polymer additives, paint additives, stabilizers, bonding and coupling agents.

## BACKGROUND OF THE INVENTION

Epoxy silanes have been known for sometime. Such compounds such as [β-(3,4-epoxycyclohexyl) ethyl]trimethoxysilane (R.N. 3388-04-3) and (gamma-glycidoxypropyl)trimethoxysilane (R.N. 25704-87-4) find use as coupling agents and in various resin compositions. See Kirk-Othmer Encyclopedia, Vol. 20, pp 968, (1982). French Patent 1,526,231 (Marcel et al) shows various non-terpenoid epoxy silanes including 8-(methdimethoxysilyl)-2,3-epoxyoctane, 4-(trimethoxysilyl)-1,2-epoxycyclohexane, 4-[β-(trimethoxysilyl) ethyl]-1,2-epoxycyclohexane and the like. In Progress in Organic Coatings, 11 (1983) 297-308, E. P. Plueddemann discusses the use of similar epoxysilanes as adhesion promoters in coatings. See also E. P. Plueddemann, Silane Coupling Agents, Plenum Press, N.Y. 1982. In a typical synthesis, an olefin alkoxysilane is prepared and the epoxide group introduced by oxidation of the unsaturation double bond.

Plueddemann et al in J. Am. Chem. Soc. 81,2632-5 (1959) describe various glycidyl silicon ethers including those obtained from limonene monoepoxide. Two such compounds are specifically described ;

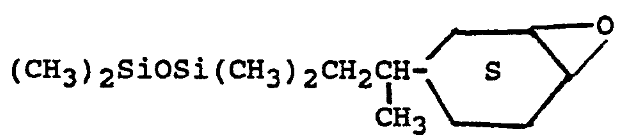

and

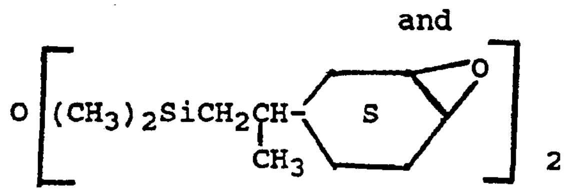

Both compounds were prepared by SiH addition across the double bond of limonene oxide.

The instant process produces terpene derived epoxysilanes by first forming an olefin epoxide having one or more unsaturated double bond sites followed by a silylation reaction i.e. addition of alkoxysilanes, alkylsilanes or mixed alkoxyalkylsilanes with one of the available unsaturation (double bond) sites. When the terpene epoxide contains a single double bond for the silylation reaction the resulting products are epoxy terpenyl alkoxy (or alkyl) silanes. When the terpene epoxy contains a second double bond unsaturation the addition of one mole of the silane will produce an epoxy terpenyl alkoxy (or alkyl) silane which retains one unreacted double bond. Such additional unsaturation is desirable both in coupling agents and in organic coatings where such unsaturation can be useful in low temperature cures and also in air cured coatings.

## BRIEF DESCRIPTION OF THE INVENTION

The invention relates to new terpene derived epoxy silane compositions and to a process for their preparation wherein the terpene is first epoxidized to yield a terpene oxide having both an epoxy group and ethylenically unsaturated double bond and said terpene oxide is next reacted with a silane having the structure HSiR'R"R''', wherein R', R" and R''' are independently selected from the group consisting of $C_{1-4}$ lower alkyl, $C_{2-4}$ lower alkenyl, or $C_{1-4}$ lower alkoxy groups.

The invention further provides an epoxysilane having the structure :

T-SiR'R"R'''

wherein R', R", and R''' are independently selected from the group consisting of $C_{1-4}$ lower alkyl, $C_{2-4}$ lower alkenyl, or $C_{1-4}$ lower alkoxy groups and wherein T is epoxy containing radical selected from

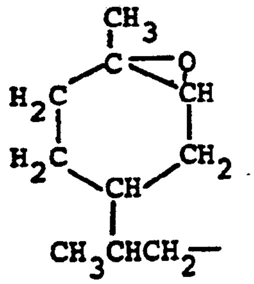 or 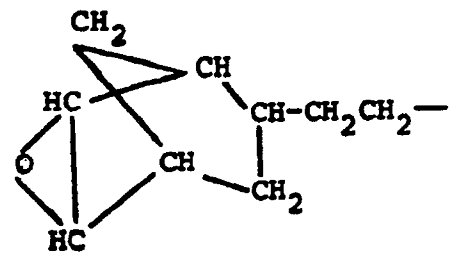 or

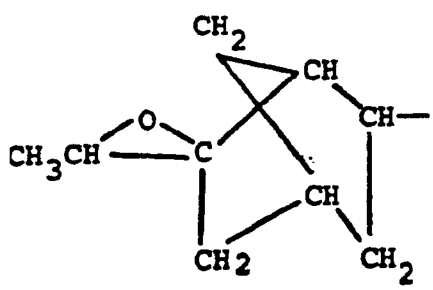 and 3-isomer

said radical being derived from cis- and trans-4R-limonene oxide, epoxy 6-ethylidene-2-norbornene, and epoxy 5-vinyl-2-norbornene ; with the proviso that when T is 1,2- epoxymenthan-9-yl it must be optically active (chiral) and at least one of the R′, R", R‴ groups has to be a lower alkyl or $C_{1-4}$ lower alkoxy group.

From a further aspect it provides a process for the preparation of an epoxysilane which comprises :

a. reacting a norbornene having one unsaturated carbon to carbon unsaturation within the norbornene ring and a further carbon to carbon unsaturation by attachment to the norbornene ring through a vinyl group or a ethylidene group, with an epoxidizing agent to yield an epoxide having both an epoxy group and an ethylenically unsaturated double bond ; and

b. reacting said epoxide in the presence of a hydro-silylation catalyst with a silane having the structure R′R"R‴SiH wherein R′, R", and R‴ are independently selected from the group consisting of $C_{1-4}$ lower alkyl, $C_{2-4}$ lower alkenyl or $C_{1-4}$ lower alkoxy groups ; and

c. isolating said epoxysilane.

Than yet further aspect it provides optionally active compunds of the formula

T-SiR′R"R‴

wherein R′, R", and R‴ are independently selected from $C_{1-4}$ lower alkoxy groups and $C_{1-4}$ lower alkyl groups and T is 1,2-epoxymenthan-9-yl derived from (cis- and trans-)4R-limonene oxide without racemization and compounds of the formulae

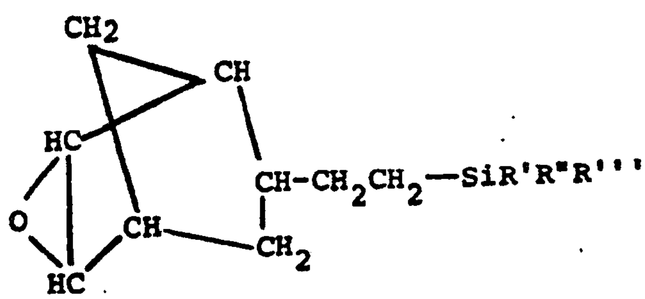

where R′, R", and R‴ are independently $C_{1-4}$ lower alkoxy groups or mixtures of lower alkoxy and $C_{1-4}$ alkyl groups and

T-SiR′R"R‴

wherein T is

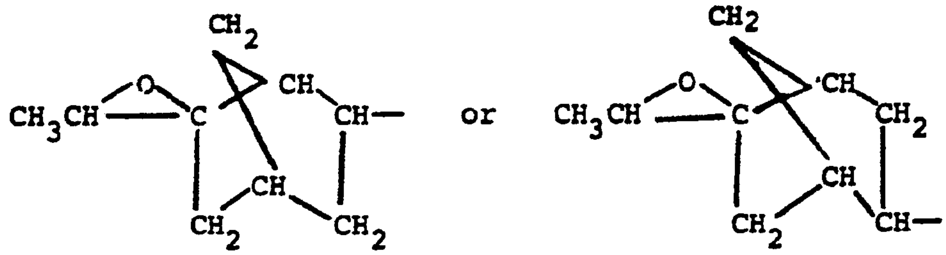

and R′, R″, and R‴ are independently $C_{1-4}$ lower alkoxy groups or mixtures of $C_{1-4}$ lower alkoxy and $C_{1-4}$ alkyl groups.

## DETAILED DESCRIPTION OF THE INVENTION

It was previously known to form epoxy silanes by first forming a silyl derivative of a multiunsaturated olefin or terpene to form a silyl olefin or silyl terpene additive via hydrosilation and in a subsequent step oxidize the remaining olefin functionality to an epoxide. In contrast, the present two-step process reverses such procedure by first forming a terpene oxide and next reacting a alkoxy or trisubstituted silane with the remaining carbon to carbon unsaturation. The resulting terpene derived epoxide silanes are believed to be new compounds.

The term terpene or terpenoid is used to identify not only unsaturated hydrocarbons having two or more isoprene units but applies equally to the saturated or partially saturated isomers having similar isoprene structure. Preferred terpenes are the monoterpenes having ten (10) carbon atoms and multiple carbon-carbon double bond unsaturation including acyclic, monocyclic, and bicyclic terpenes.

Useful terpenes which may be in part epoxidized to form an epoxy terpene having a remaining double bond unsaturation capable of further reaction with various silanes include practically all known terpenes. Preferred terpene reactants are those derived from myrcene, limonene, norbornene and the like. One double bond of the terpene is converted to an epoxide via oxidation methods practiced in the industry. Usually it is preferred to isolate the terpene epoxide product before conducting the silylation reaction to form a carbon-silicon linkage. Alternatively the epoxide reaction product may be further reacted with the silane without isolation or purification. In addition to the starting terpenes noted above, other terpenes can be utilized as for example, 5-ethylidene-2-norbornene, 5-vinyl-2-norbornene, 3S-dihydromyrcene, d-limonene, ocimene, allo-ocimene, dipentene and the like.

Referring next to the silylation reaction of the terpene epoxide, various silanes can be used to produce the multifunctional terpene derived epoxy silanes. In general the silane can be represented by the formula HSiR′R″R‴ wherein R′, R″, and R‴ are independently selected from the group consisting of $C_{1-4}$ alkyl, $C_{2-4}$ alkylene, and $C_{1-4}$ lower alkoxy groups. Advantageously the silane to be reacted with the terpene oxide is a trialkoxysilane especially where greater activity of the product is desired. The silane can also be a trialkylsilane when greater hydrolytic stability of the silane portion is needed. Also contemplated are the intermediate silanes such as the alkyldialkoxysilanes and the dialkylalkoxysilanes. Examples of trialkoxysilanes includes trimethoxysilane, triethoxysilane, tripropoxysilane, and tributoxysilane. Examples of trialkylatedsilanes includes trivinylsilane, triethylsilane, trimethylsilane, triallylsilane and the like. Examples of mixed alkyl-alkoxy-silanes, are methyldimethoxysilane and the like. It is recognized that the properties of the epoxy terpene derived silanes will depend on the choice of R′, R″, and R‴. Triethylsilane is a preferred alkylsilane; triethoxysilane is a preferred trialkoxysilane ; and methyldimethoxysilane is a preferred mixed silane. These silanes are preferred largely because of the cost and availability but in part on the basis of the properties imparted to the epoxysilane product.

Examples of terpene derived epoxysilanes which have no remaining double bond unsaturation and which can be used as coupling agents and for other purposes in organic coatings are those of the formula

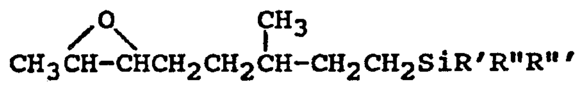

wherein R', R" and R‴ are independently selected from the group consisting of $C_{1-4}$ lower alkyl, $C_{2-4}$ lower alkenyl and $C_{1-4}$ lower alkoxy groups and include 8-(trimethoxysilyl)-2,6-dimethyl-2,3-epoxyoctane ; 8-(triethoxysilyl)2,6-dimethyl-2,3-epoxyoctane ; 8-(methyldimethoxysilyl)2,6-dimethyl-2,3-epoxyoctane ; and 8-(methyldiethoxysilyl)-2,6-dimethyl-2,3-epoxyoctane. Examples of terpene derived epoxysilanes having residual unsaturation are those of the formula

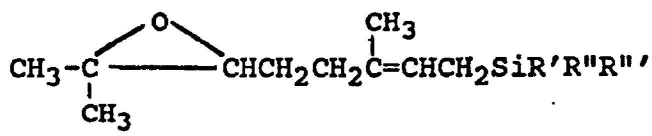

wherein R', R" and R‴ are each independently selected from $C_{1-4}$ lower alkyl, $C_{2-4}$ lower alkenyl and $C_{1-4}$ lower alkyl groups include 8-(triethoxysilyl)-2,6-dimethyl-2,3-epoxyoctene-6 and 8-(methyldiethoxysilyl)-2,6-dimethyl-2,3-epoxyoctane-6. It will be appreciated that this nomenclature is less specific then corresponding compounds shown in the best mode examples wherein the name incorporates the particular derived terpene. In addition to acting as coupling agents the compounds of this invention will be used as components or additives of coating compositions serving in part as stabilizing agents, flavor and perfume agents, cure catalysts and as cure accelerators in those terpene derived epoxides having residual unsaturation.

According to the present invention there is further provided a process for preparing a terpene derived epoxy silane which comprises a) reacting a terpene with an epoxidizing agent to yield a terpene oxide having both an epoxy group and an ethylenically unsaturated double bond b) reacting the terpene oxide so formed in the presence of a hydrosilylation catalyst with a silane having the structure R'R"R‴SiH wherein R', R" and R‴ are independently selected from $C_{1-4}$ lower alkoxy groups $C_{2-4}$ lower alkenyl and $C_{1-4}$ lower alkyl groups and c) isolating said epoxy terpenyl silane.

The oxidation reaction of the terpene to form the terpene oxide is well known in the art. It is preferred to conduct the epoxidation in a solvent and to moderate the reaction temperature below 30°C. Although it is preferred to use peracetic acid for this oxidation, other oxidants can be substituted as for example metachloroperbenzoic acid, alkyl hydroperoxides and molybdenum or vanadium salts, hydrogen peroxide with tungsten and molybdenum salts. See R. A. Sheldon, J. Mol. Cat., 7, 107 (1980).

Similarly the silylation reaction is known to the art. It is preferred to catalyze the addition of the Si-H bond to the unsaturated bond of the epoxy terpene and to perform silylation in a solvent at moderate temperature i.e. 50-70°. The reaction can be followed by GLC analysis. A catalyst, such as chloroplatinic acid in acetone, is a preferred catalyst for the reaction. Other catalysts, such as for example, supported platinum catalysts, cobalt, rhodium and iridium, homogeneous or heterogeneous systems and common free radical initiators can be substituted. The product is usually isolated by distillation.

In the case where the terpene used is limonene or a nonbornene having an external vinyl or ethylidene unsaturation, the silane employed may be one where the R', R", and R‴ groups are independently selected from $C_{1-4}$ lower alkyl $C_{2-4}$ lower alkenyl and $C_{1-4}$ lower alkoxy.

The products prepared according to the invention are sufficiently pure for most applications, e.g. as coupling agents, sizes and finishes for use on glass, adhesion promoters, stabilizers, use in coatings and electrocoating compositions and as moisture scavengers or protectants.

The terpene starting materials are derived from natural products, usually optically active (chiral) and are relatively innocuous. Advantageously these properties make the epoxy silane adducts of the present invention much preferred over the nonterpenoid structures of the prior art which are traditionally quite toxic. It is believed that the improved toxicity results largely from the terpenoid structure inherent in the instant terpene derived epoxy silanes.

## PREPARATION OF OLEFIN EPOXIDES

### EXAMPLE 1

3S-Dihydromyrcene-6,7-epoxide – To an ice-cooled, stirred mixture of 680 g (5.0 mol.) 3S- dihydromyrcene, 400 g of sodium carbonate in 400 m. of methylene chloride was slowly added 800 ml. of 40% peracetic acid, while keeping the internal temperature below 30°C. After stirring overnight, the liquid was decanted to a separatory funnel. The oil was separated, washed with sodium sulfite solution and then with sodium carbonate, dried over magnesium sulfate, and evaporated to dryness. Distillation of the product on a 2′ column gave 607.7 g (80% yield) of epoxide, bp 84-97°C/25 mm.

### EXAMPLE 2

Myrcene-6,7-epoxide – Epoxidation of 680 g of myrcene was carried out in exactly the same manner as the above example to give the myrcene-6,7-epoxide, bp 78-80°C/16 mm.

### EXAMPLE 3

Cis- and trans-) 4R-Limonene Oxide – A mechanically stirred mixture of 1 kg. (7.3 mol.) and sodium carbonate (310.6 g) was cooled to 0°-10°C., and treated with 1.61 kg. (9.1 mol.) 40% peracetic acid by dropwise addition. After the addition was complete, the reaction mixture was stirred for another 45 min., washed with ice water, sodium carbonate, and brine. The oil was dried over magnesium sulfate, and distilled to give recovered limonene (30 g), the cis-epoxide (257 g) and trans-epoxide (296 g), and diepoxide (82 g).

### EXAMPLE 4

5-Ethylidenenorbornene-5,8-epoxide – Epoxidation of 600 g (5.0 mol.) of 5-ethylidene-2-norbornene with 800 ml. of 40% peracetic acid in 400 ml. methylene chloride in the presence of 400 g sodium carbonate at 25-35°C. gave 287.3 g (42.25% of the distilled product. Bp 78-80°C/25 mm.).

### EXAMPLE 5

5-Vinyl-2,3-epoxynorbornene – Epoxidation of 600 g (5.0 mol.) of 5-vinyl-2-norbornene in the same manner as described. Distillation of combined products from two identical runs gave 939 g (69%) epoxide (bp 93-94°C./25 mm.).

## HYDROSILYLATION OF EPOXY OLEFINS

### EXAMPLE 6

3S-6,7-Epoxycitronellyltriethoxysilane – A solution of 25 g (0.162 mol.) 3S-dihydromyrcene-6,7-epoxide and 27 g (0.164 mol.) triethoxysilane was heated to 50°C. To the solution was added 30 cc of a 1% w/v solution of chloroplatinic acid in acetone dropwise, keeping the temperature between 60-70°C. After addition, the solution was kept at 70°C. for 3 hours. GLC of the reaction mixture showed 78% conversion of reactants to a dominant product. The titled compound was isolated by distillation, bp (180°C./0.1 mm.) (39 g, 75% yield) NMR ($CDCl_3$) 0.5-0.8 (m, 2), 0.9 (bd, 3), 1.21 (t, 9), 1.29 (s, 3), 1.31 (s, 3), 1.4-1.8 (m, 7), 2.7 (bt, 1), 3.8 (q, 6) ppg ; IR (neat film, $cm_{-1}$) 2900, 1440, 1370, 1180-1140, 945, 750.

### EXAMPLE 7

3S-6,7-Epoxycitronellylmethyldiethoxysilane – Methyldiethoxysilane (22 g, 0.164 mol.) was added to a solution of 3S-dihydromyrcene-6,7-epoxide (25 g ; 0.165 mol.) and 10 ml. of 1% chloroplatinic acid hexahydrate in acetone. The resultant solution was heated to 57°C. for 4 hours. A GLC of the cooled reaction mixture showed 89% conversion to a dominant product. The titled compound was isolated by distillation bp 180°/0.1 mm., (40 g, 85% yield). NMR ($CDCl_3$) 0.05 (s, 3), 0.5-0.8 (m, 2), 0.9 (bd, 3), 1.2 (t, 6), 1.28 (s, 3), 1.31 (s, 3), 1.4-1.8 (m, 7), 2.7 (bt, 1), 3.8 (q, 4) ppm ; m/e (70 ev) 288 ($m^+$).

In an analogous manner, trimethoxysilane and methyldimethoxysilane were added to 3S-dihydromyrcene-6,7-epoxide.

EXAMPLE 8

3S-6,7-Epoxycitronellyltrimethoxysilane – bp (130°C., 0.1 mm.) (35% yield). GLC, 6′ × 1/8" 10% SP 2100 on Supelcoport. Initial temperature 50°C. for 2 min., 16°/min. to 250°C. carrier flow 20 cc/min. Retention time 13.02 min. NMR $CDCl_3$ 0.5-.7 (m, 2), 0.9 (bd, 3), 1.28 (s, 3) 1.34 (s, 3) 1.4-1.8 (m, 7), 3.7 (bt, 1), 3.5 (s, 9) ppm ; m/e (70 ev) 276 ($m^+$).

EXAMPLE 9

3S-6,7-Epoxycitronellylmethyldimethoxysilane – bp (120° 0.1 mm.) (55% yield) GLC analysis on a 6′ × 1/8" 3% SP 2100 on Supelcoport : Initial temperature 50°C. for 2 min. 16°/min. to 250° carrier flow 20 cc/min., retention time 11.93 min., m/3 (70 ev) 260 ($m^+$).

EXAMPLE 10

6,7-EpoxygeranyLtriethoxysiLane 8 Triethoxysilane (41 g, 0.25 mol.) myrcene epoxide (38 g, 0.25 m) and 2.5 ml. of a 1% w/v solution of chloroplatinic acid in acetone were mixed together in a Fischer Porter bottle. The bottle was sealed and heated to 105°C. for 6 hours. Analysis by GLC indicates 30% conversion to titled compound. The product was purified by distillation, bp 180°/0.1 mm.), affording 20 g (25%) yield. NMR ($CDCL_3$) 1.2 (t, 9), 1.25 (s, 3) 1.32 (s, 3) 1.4-1.8 (m, 2) 1.9 (s, 3) 2.1-2.4 (m, 4), 2.7 (t, 1) 3.85 (q, 6) 4.5-5.2 (m, 1) ppm ; IR (neat film $cm^{-1}$) 2900, 1480, 1390, 1180-1120, 955.

EXAMPLE 11

4R-1,2-Epoxymenthyltriethoxysilane – To a solution of (cis- and trans-)4R-limonene oxide, (50 g, 0.33 mol.) and triethoxysilane (55 g, 0.335 mol.) was added 3 g of 5% Pt on C. The solution was heated to 108°C. for 14 hours. The product was isolated by filtration and distillation, bp 120°C. (0.1 mm.) 50 g, (48%). NMR $CDCl_3$ 0.5-.9 (m, 2) 0.9 (d, 3), 1.2 (t, 9) 1.3 (s, 3) 1.3-2 (m, 9) 3.0 (bd, 1) 3.9 (q, 6) ppm ; IR (neat film $cm^{-1}$) 2900, 1430, 1390, 1180-1050, 940 ; m/e (70 ev) 316 ($m^+$).

EXAMPLE 12

2-(β-triethoxysilyl)ethyl-5,6-epoxynorbornane – To a solution of 6-(2,3-epoxynorbornyl)ethylene (68 g, 0.5 mol.) containing 1 ml. of 1% chloroplatinic acid hexahydrate in acetone was slowly added triethoxysilane (85 g 0.52 mol.) at 110°C. (0.1 mm.) yielding a colorless mobile liquid (90 g, 60%)

The following spectroscopic characteristic are consistent with the titled structure : NMR $CDCl_3$ 0.5-.9 (m, 4) 1.2 (t, 9) 1.2-1.9 (bm, 4) 2.5 (bs, 2) 3.1 (d, 2), 3.85 (q, 6) ppm ; IR (neat film) $cm^{-1}$, 3900, 1420, 1380, 1350, 1330, 1150, 1090, 950, 850.

EXAMPLE 13

2 or 3-Triethoxysilyl-5-ethylidenenorbornane Epoxide

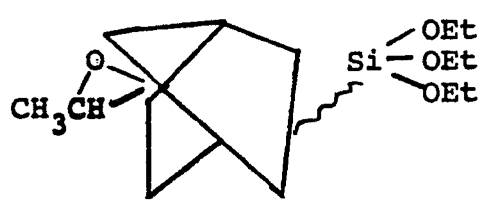

– To a solution of 5-ethylidinenorbornene-5,8-epoxide (47 g, 0.345 mol.) was added 5 ml. of a 1% by weight chloroplatinic acid in acetone solution. The solution was heated to 80°C. and 62 g (0.38 mol.) of triethoxysilane was added dropwise over a period of 1 hour. The reaction was exothermic, final temperature 115°C. After cooling, the mixture was analysed by GLC 74% conversion. The product was purified by distillation, bp 150°/1 mm. 60 g (59% yield) NMR ($CDCl_3$) 0.8-1.1 (m, 1), 1.2 (t, 9), 1.3 (bd, 3), 1.6 (bs, 4), 1.6-1.8

(m, 2), 2.3-2.5 (m, 2), 3.0 (bq, 1), 3.85 (q, 6) ppm ; IR (neat film $cm^{-1}$) 3000, 1520, 1480, 1420, 1220, 1180-1130, 990.

## Claims

1. An epoxysilane having the structure :

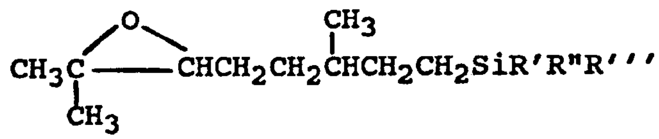

wherein R', R", R''' are independently selected from the group consisting of $C_{1-4}$ lower alkyl, $C_{2-4}$ lower alkenyl or $C_{1-4}$ lower alkoxy groups.

2. 3S-6,7-Epoxycitronellyltriethoxysilane.

3. 3S-6,7-Epoxycitronellylmethyldiethoxysilane.

4. An epoxysilane having the structure :

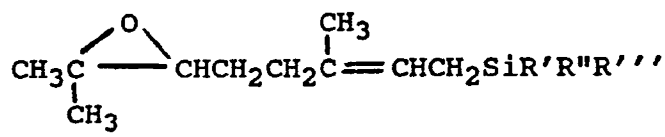

wherein R', R", and R''' are independently selected from the group consisting of $C_{1-4}$ lower alkyl, $C_{2-4}$ lower alkenyl, or $C_{1-4}$, lower alkoxy groups.

5. 6,7-Epoxygeranyltriethoxysilane.

6. An epoxysilane according to claim 1 or 4, wherein at least one of the R', R", or R''' groups attached to the silicon atom is an alkoxy groups.

7. A process for the preparation of terpene derived epoxysilane according to any one of the preceding claims which comprises :

a. reacting a terpene with an epoxidizing agent to yield a terpene epoxide having both an epoxy group and an ethylenically unsaturated double bond ; and

b. reacting said terpene epoxide in the presence of a hydrosilylation catalyst with a silane having the structure R'R"R'''SiH wherein R', R", and R''' are independently selected from the group consisting of $C_{1-4}$ lower alkoxy groups, $C_{2-4}$ lower alkenyl and $C_{1-4}$ lower alkyl groups and

c. isolating said epoxyterpenylsilane.

8. The process of claim 7, wherein the terpene is selected from the group consisting of myrcene, dihydromyrcene, and limonene.

9. The process of claim 7, wherein said terpene and said terpene derived epoxy silane are optically active.

10. An epoxysilane having the structure :

T-SiR'R"R'''

wherein R', R", and R''' are independently selected from the group consisting of $C_{1-4}$ lower alkyl, $C_{2-4}$ lower alkenyl, or $C_{1-4}$ lower alkoxy groups and wherein T is epoxy containing radical selected from

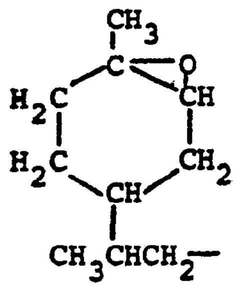

or

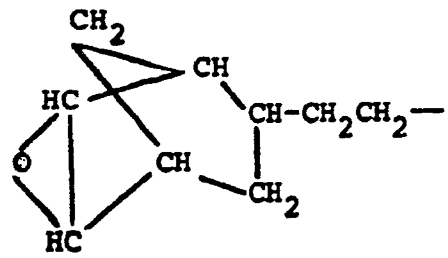

or

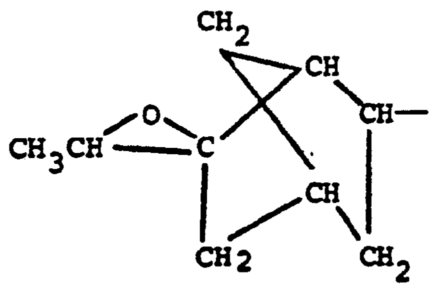

and 3-isomer

said radical being derived from cis- and trans-4R-limonene oxide, epoxy 6-ethylidene-2-norbornene, and epoxy 5-vinyl-2-norbornene ; with the proviso that when T is 1,2- epoxymenthan-9-yl it must be optically active (chiral) and at least one of the R′, R", R‴ groups has to be a lower alkyl or $C_{1-4}$ lower alkoxy group.

11. A process for the preparation of an epoxysilane which comprises :

a. reacting a norbornene having one unsaturated carbon to carbon unsaturation within the norbornene ring and a further carbon to carbon unsaturation by attachment to the norbornene ring through a vinyl group or a ethylidene group, with an epoxidizing agent to yield an epoxide having both an epoxy group and an ethylenically unsaturated double bond ; and

b. reacting said epoxide in the presence of a hydrosilylation catalyst with a silane having the structure R′R"R‴SiH wherein R′, R", and R‴ are independently selected from the group consisting of $C_{1-4}$ lower alkyl, $C_{2-4}$ lower alkenyl or $C_{1-4}$ lower alkoxy groups ; and

c. isolating said epoxysilane.

12. An optically active epoxysilane having the structure

T-SiR′R"R‴

wherein R′, R", and R‴ are independently selected from $C_{1-4}$ lower alkoxy groups and $C_{1-4}$ lower alkyl groups and T is 1,2-epoxymenthan-9-yl derived from (cis- and trans-)4R-limonene oxide without racemization.

13. An optically active epoxysilane having the structure

T-SiR′R"R‴

wherein R′, R", and R‴ are independently selected from $C_{1-4}$ lower alkoxy groups and T is 1,2-epoxymenthan-9-yl derived from (cis- and trans-)4R-limonene oxide without racemization.

14. An optically active epoxysilane having the structure

T-SiR′R"R‴

wherein R′, R", and R‴ are independently selected from $C_{1-4}$ lower alkyl groups and T is 1,2-epoxymenthan-9-yl derived from (cis- and trans-)4R-limonene oxide without racemization.

15. An epoxysilane having the structure :

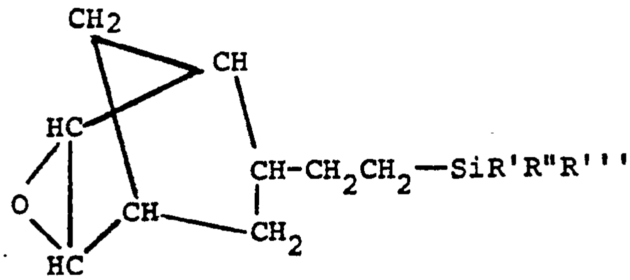

where R′, R", and R‴ are independently $C_{1-4}$ lower alkoxy groups or mixtures of lower alkoxy and $C_{1-4}$ alkyl groups.

16. An epoxysilane having the structure :

T-SiR′R"R‴

wherein T is

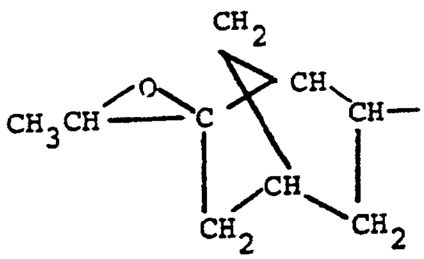

or

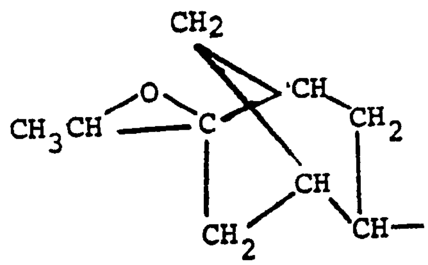

and R′, R", and R‴ are independently $C_{1-4}$ lower alkoxy groups or mixtures of $C_{1-4}$ lower alkoxy and $C_{1-4}$ alkyl groups.

**Ansprüche**

1. Epoxysilan mit der Struktur

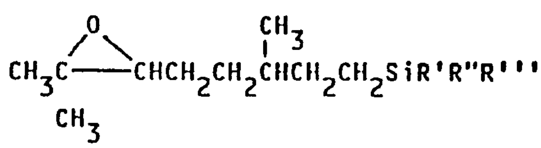

in der R′, R", R‴ unabhängig voneinander aus der Gruppe ausgewählt sind, die aus den niederen $C_{1-4}$-Alkyl-, niederen $C_{2-4}$-Alkenyl- oder niederen $C_{1-4}$-Alkoxygruppen besteht.

2. 3S-6,7-Epoxycitronellyltriethoxysilan.

3. 3S-6,7-Epoxycitronellylmethyldiethoxysilan.

4. Epoxysilan mit der Struktur

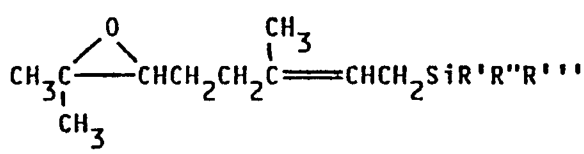

in der R′, R", R‴ unabhängig voneinander aus der Gruppe ausgewählt sind, die aus den niederen $C_{1-4}$-Alkyl-, niederen $C_{2-4}$-Alkenyl- oder niederen $C_{1-4}$-Alkoxygruppen besteht.

5. 6,7-Epoxygeranyltriethoxysilan.

6. Epoxysilan nach Anspruch 1 oder 4, dadurch gekennzeichnet, daß mindestens eine der an dem Siliciumatom angelagerten Gruppen R′, R″ oder R‴ eine Alloxygruppe ist.

7. Verfahren zum Erzeugen eines von Terpen abgeleiteten Epoxysilans nach einem der vorhergehenden Ansprüche, in dem

a. durch Umsetzen eines Terpens mit einem Epoxidationsmittel ein Terpenepoxid erzeugt wird, das eine Epoxidgruppe und eine ethylenisch ungesättigte Doppelbindung hat, und

b. das Terpenepoxid in Gegenwart eines Hydrosilylationskatalysators mit einem Silan imgesetzt wird, das die Struktur R′R″R‴ hat, in der R′, R″ und R‴ unabhängig voneinander aus der Gruppe ausgewählt sind, die aus den niederen $C_{1\text{-}4}$-Alkoxy-, den niederen $C_{2\text{-}4}$-Alkenyl- und den niederen $C_{1\text{-}4}$-Alkylgruppen besteht, und

c. das Epoxyterpenylsilan isoliert wird.

8. Verfahren nach Anspruch 7, dadurch gekennzeichnet, daß das Terpen aus der Gruppe ausgewählt wird, die aus Myrcen, Dihydromyrcen und Limonen besteht.

9. Verfahren nach Anspruch 7, dadurch gekennzeichnet, daß das Terpen und das von Terpen abgeleitete Epoxysilan optisch aktiv sind.

10. Epoxysilan mit der Struktur

T-SiR′R″R‴

in der R′, R″, R‴ unabhängig voneinander aus der Gruppe ausgewählt sind, die aus den niederen $C_{1\text{-}4}$-Alkyl-, niederen $C_{2\text{-}4}$-Alkenyl- oder niederen $C_{1\text{-}4}$-Alkoxygruppen besteht und T ein epoxidhaltiges Radikal Ist, das aus

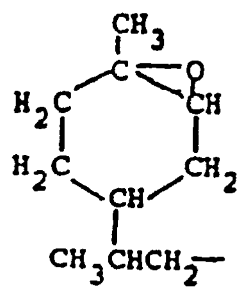

ou

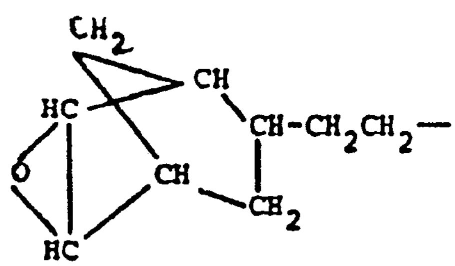

oder

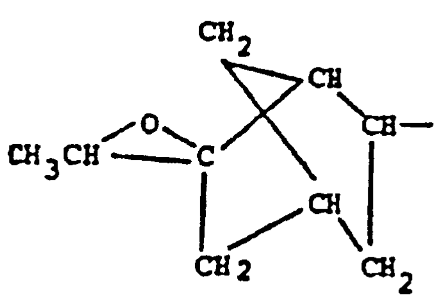

und dem 3-Isomeren ausgewählt ist, wobei das Radikal von cis- und trane-4R-Limonenoxid, Epoxy-6-ethyliden-2-Norbornen und Epoxy-5-vinyl-2-norbornen abgeleitet ist, mit der Maßgabe, daß, wenn T 1,2-Epoxymenthan-9-yl ist, es optisch altiv (chiral) sein muß und mindestens eine der Gruppen R′, R″, R‴ eine niedere Alkyl- oder eine niedere $C_{1\text{-}4}$-Alkoxygruppe sein muß.

11. Verfahren zum Erzeugen eines Epoxysilans, in dem

a. zum Erzeugen eines Epoxids mit einer Epoxygruppe und einer ethylenisch ungesättigten Doppelbindung ein Norbornen, das im Norbornenring eine ungesättigte Kohlenstoff-Kohlenstoffbindung besitzt und das infolge einer über eine Vinylgruppe oder eine Ethylidengruppe erfolgten Anlagerung an dem Norbornenring eine weitere ungesättigte Kohlenstoff-Kohlenstoff-Bindung besitzt, mit einem Epoxidationsmittel umgesetzt wird ;

b. das Epoxid in Gegenwart eines Hydrosilylationskatalysators mit einem Silan umgesetzt wird, das die Struktur R′R″R‴ hat, in der R′, R″ und R‴ unabhängig voneinander aus der Gruppe ausgewählt sind, die aus den niederen $C_{1\text{-}4}$-Alkoxy-, den niederen $C_{2\text{-}4}$-Alkenyl- und den niederen $C_{1\text{-}4}$-Alkylgruppen besteht, und

c. das Epoxysilan isoliert wird.

12. Optisch altives Epoxysilan mit der Struktur

T-SiR'R"R'''

in der R', R" und R''' unabhängig voneinander aus den niederen $C_{1-4}$-Alkoxy- und den niederen $C_{1-4}$-Alkylgruppen ausgewählt sind und T ein von dem (cis- und trans-)4R-Linonenoxiden ohne Racemisierung abgeleitetes 1,2-Epoxymenthan-9-yl ist.

13. Epoxysilan mit der Struktur

T-SiR'R"R'''

in der R', R" und R''' unabhängig voneinander aus den niederen $(_{1-4}$-Alkoxygruppen ausgewählt sind und T 1,2-Epoxymenthan-9-yl ist, das ohne Racemisierung von (cis- und trans-)-4R-Limonenoxid abgeleitet ist.

14. Epoxylan mit der Struktur

T-SiR'R"R'''

in der R', R" und R''' unabhängig voneinander aus den niederen $C_{1-4}$-Alkylgruppen ausgewählt sind und T 1,2-Epoxymenthan-9-yl ist, das ahne Racemisierung von (cis- und trans-)-4R-Limonen-oxid abgeleitet ist.

15. Epoxysilan mit der Struktur

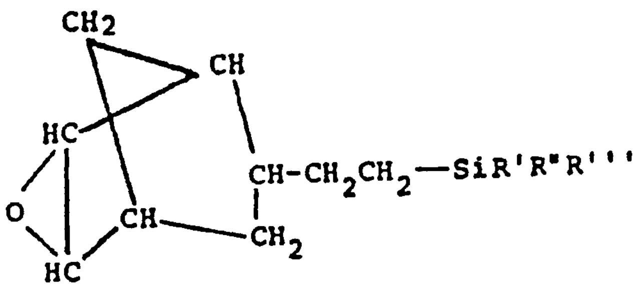

in der R', R" und R''' unabhängig voneinander niedere $C_{1-4}$-Alkoxygruppen oder Gemische von niederen Alkoxy- und $C_{1-4}$-Alkylgruppen sind.

16. Epoxysilan mit der Struktur

T-SiR'R"R'''

in der T

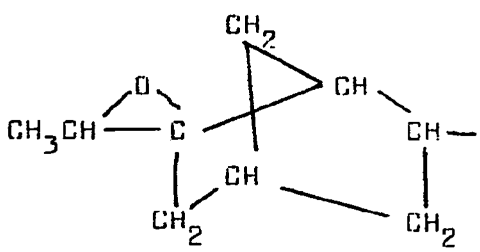

oder

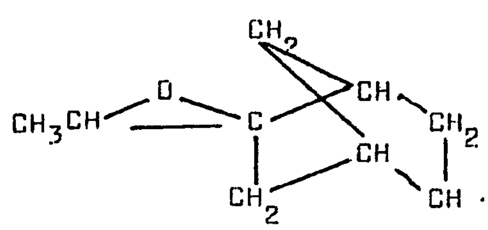

ist und R', R" und R''' unabhängig voneinander niedere $C_{1-4}$-Alkoxygruppen ader Gemische von niederen $C_{1-4}$-Alkoxy-und $C_{1-4}$-Alkylgruppen sind.

## Revendications

1. Un époxysilane possédant la formule :

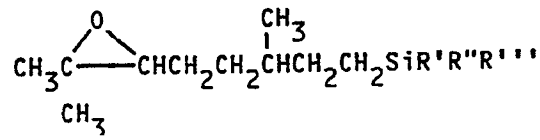

dans laquelle R′, R" et R‴ sont choisis indépendamment parmi les groupes alkyles inférieurs en $C_1$-$C_4$, alcényles inférieurs en $C_2$-$C_4$ et alcoxy inférieurs en $C_1$-$C_4$.

2. Le 3S-6,7-époxycitronellyltriéthoxysilane.

3. Le 3S-6,7-époxycitronellylméthyldiéthoxysilane.

4. Un époxysilane possédant la formule :

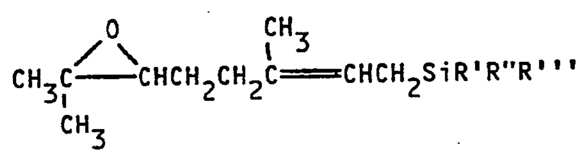

dans laquelle R′, R" et R‴ sont choisis indépendamment parmi les groupes alkyles inférieurs en $C_1$-$C_4$, alcényles inférieurs en $C_2$-$C_4$ et alcoxy inférieurs en $C_1$-$C_4$.,

5. Le 6,7-époxygéranyltriéthoxysilane.

6. Un époxysilane selon la revendication 1 ou 4, dans lequel l'un au moins des groupes R′, R" et R‴ liés à l'atome de silicium est un groupe alcoxy.

7. Un procédé pour la fabrication d'un époxysilane terpénique selon l'une quelconque des revendications précédentes, qui consiste :

a. à faire réagir un terpène avec un agent d'époxydation pour donner un époxyde terpénique ayant à la fois un groupe époxy et une double liaison éthylénique ; et

b. à faire réagir ledit époxyde terpénique en présence d'un catalyseur d'hydrosilylation avec un silane possédant la formule R′R"R‴SiH, dans laquelle R′, R" et R‴ sont choisis indépendamment parmi les groupes alcoxy inférieurs en $C_1$-$C_4$, alcényles inférieurs en $C_2$-$C_4$ et alkyles inférieurs en $C_1$-$C_4$ et

c. à isoler ledit époxyterpénylsilane.

8. Le procédé selon la revendication 7, dans lequel le terpène est choisi parmi le myrcène, le dihydromyrcène et le limonène.

9. Le procédé selon la revendication 7, dans lequel ledit terpène et ledit époxysilane terpénique sont optiquement actifs.

10. Un époxysilane possédant la formule

T-SiR′R"R‴

dans laquelle R′, R" et R‴ sont choisis indépendamment parmi les groupes alkyles inférieurs en $C_1$-$C_4$, alcényles inférieurs en $C_2$-$C_4$ et alcoxy inférieurs en $C_1$-$C_4$ et dans lequel T est un radical contenant un groupe époxy, choisi parmi

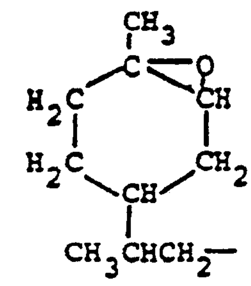

ou

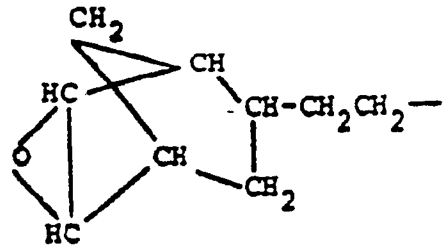

ou

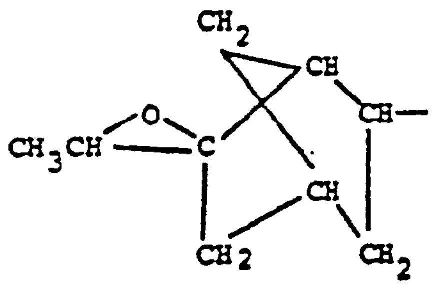

et l'isomère 3

ledit radical étant dérivé de l'oxyde de (cis- et trans-)4R-limonène, de l'époxy 6-éthylidène-2-norbornène, et de l'époxy-5-vinyl-2-norbornène ; avec la condition que lorsque T est le groupe 1,2-époxymenthane-9-yle, il doit être optiquement actif (chiral) et l'un au moins des groupes R′, R″ et R‴ doit être un groupe alkyle inférieur ou alcoxy inférieur en $C_1$-$C_4$.

11. Un procédé pour la fabrication d'un époxysilane, qui consiste :

a. à faire réagir un norbornène ayant une double liaison carbone-carbone dans le noyau norbornène et une autre double liaison carbone-carbone par fixation au noyau norbornène par un groupe vinyle ou un groupe éthylidène avec un agent d'époxydation pour donner un époxyde ayant à la fois un groupe époxy et une double liaison éthylénique ; et

b. à faire réagir ledit époxyde en présence d'un catalyseur d'hydrosilylation avec un silane de formule R′R″R‴SiH dans laquelle R′, R″ et R‴ sont choisis indépendamment parmi les groupes alkyles inférieurs en $C_1$-$C_4$, alcényles inférieurs en $C_2$-$C_4$ et alcoxy inférieurs en $C_1$-$C_4$ ; et

c. à isoler ledit époxysilane.

12. Un époxysilane optiquement actif répondant à la formule

T-SiR′R″R‴

dans laquelle R′, R″ et R‴ sont choisis indépendamment parmi les groupes alcoxy inférieurs en $C_1$-$C_4$ et les groupes alkyles inférieurs en $C_1$-$C_4$ et T est un groupe 1,2-époxymenthane-9-yle dérivé de l'oxyde de (cis- et trans-)4R-limonène sans racémisation.

13. Un époxysilane optiquement actif répondant à la formule

T-SiR′R″R‴

dans laquelle R′, R″ et R‴ sont choisis indépendamment parmi les groupes alcoxy inferieurs en $C_1$-$C_4$ et T est un groupe 1,2-époxymenthane-9-yle dérivé de l'oxyde de (cis- et trans-)4R-limonène sans racémisation.

14. Un époxysilane optiquement actif répondant à la formule

T-SiR′R″R‴

dans laquelle R′, R″ et R‴ sont choisis indépendamment parmi les groupes alkyles inférieurs-en $C_1$-$C_4$ et T est un groupe 1,2-époxy-menthane-9-yle dérivé de l'oxyde de (cis- et trans-)4R-limonène sans racémisation.

15. Un époxysilane répondant à la formule

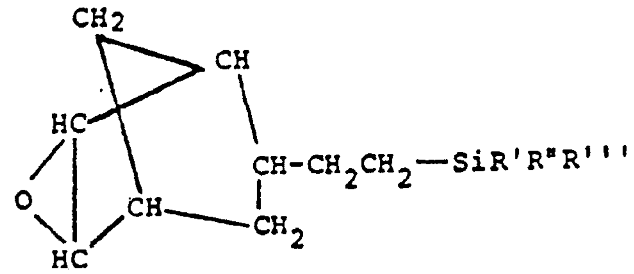

dans laquelle R', R" et R''' sont choisis indépendamment parmi les groupes alcoxy inférieurs en $C_1$-$C_4$ ou les mélanges de groupes alcoxy et de groupes alkyles inférieurs en $C_1$-$C_4$.

16. Un époxysilane répondant à la formule :

T-SiR'R"R'''

dans laquelle T est un groupe

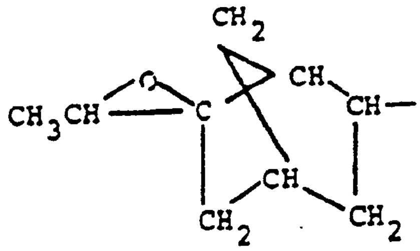

ou

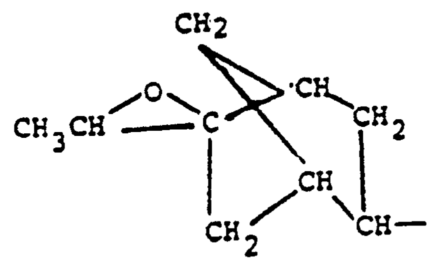

et R', R" et R''' sont choisis indépendamment parmi les groupes alcoxy inférieurs en $C_1$-$C_4$ ou les mélanges de groupes alcoxy inférieurs en $C_1$-$C_4$ et de groupes alkyles en $C_1$-$C_4$.